# EUROPEAN PATENT SPECIFICATION

(11) **EP 2 962 827 B1**
(45) Date of publication and mention of the grant of the patent: **06.02.2019**
(21) Application number: 15174701.1
(22) Date of filing: 30.06.2015
(51) Int. Cl.: B29C 43/18, B29C 43/20, B60R 13/08, B29L 31/30, B29C 43/02

(54) **METHOD AND APPARATUS FOR MOULDING COMPONENTS FOR VEHICLES**
VERFAHREN UND VORRICHTUNG ZUM FORMEN VON KOMPONENTEN FÜR FAHRZEUGE
PROCÉDÉ ET APPAREIL POUR LE MOULAGE DE COMPOSANTS POUR VÉHICULES

(30) Priority: 03.07.2014 IT BS20140120
(43) Date of publication of application: 06.01.2016
(73) Proprietor: TWICE PS S.p.A., 20124 Milano (IT)
(72) Inventor: ANTONIOLI, Andrea, Nandlstadt (DE); CIONI, Gianni, I-50051 Castelfiorentino, FIRENZE (IT); GARIBOLDI, Gianpietro, I-20854 Vedano al Lambro, MONZA-BRIANZA (IT)
(74) Representative: Pulieri, Gianluca Antonio

(56) References cited:
- WO-A1-97/48576
- CA-C- 2 179 820
- DE-A1-102012 217 373
- FR-A1- 2 821 789
- US-A1- 2009 127 026
- US-A1- 2009 220 766

## Description

The present invention falls, in general, within the sector of the production of structural components for vehicles; in particular, the invention relates to a method for moulding components for vehicles and to a particular interposition element used during such moulding method. The present invention also relates to an apparatus for the production of such a component for vehicles.

As is known, methods which allow the production of components or support structures for vehicles with a high resistance but with reduced use of materials and construction times compared to metal, fall within the manufacturing processes of components in thermoplastic material.

In general, the manufacturing method of components for vehicles in thermoplastic material provides for moulding the component by placing the plastic material inside the mould and thermoforming the component thanks to the pressure generated by a press on the mould. Such thermoplastic materials may be, for example, Glass-Mat Thermoplastic (GMT) materials, i.e. thermoplastic materials reinforced with glass fibres, Long Fiber reinforced Thermoplastic (LFT) materials, i.e. thermoplastic materials reinforced with long fibre, or LightWeight Reinforced Thermoplastic (LWRT) materials, namely thermoplastic materials reinforced with glass fibres with a lower specific weight and a higher stiffness/weight ratio than GMT materials.

It is known that, downstream of the moulding step, for some components, such as underbody shields for motor vehicles, it is necessary to fix mechanically or weld in an appropriate manner accessory bodies in plastic material or in metal, so to add auxiliary thermal or mechanical characteristics. In the case of underbody shields, for example, downstream of the moulding process, accessory bodies may be attached (for example absorbers or heat shields for example in aluminium) with special sound and/or heat absorption properties in order to attenuate the noise and/or the heat from the engine of the vehicle towards the inside of the passenger compartment, thus improving comfort for the passengers. Currently such absorbers are fixed to the underbody shields (or panels under the engine or underbody) using different attachment techniques depending on the material they consist of. In the case in which the material of the thermoplastic type is compatible with the material which the underbody panel is made of, such as polyethylene terephthalate (PET), ultrasound (US) spot welding is generally carried out, wherein the materials are thermoplastically welded by means of the local heat generated by the ultrasound. In the case in which the plastic type material (for example polyurethane, PUR) is instead incompatible with the material of the underbody panel, overmoulding techniques in which the plastic material is wrapped in sheets of other compatible plastic material, or mechanical attachment techniques are used. In the case where the absorber is made of metal (for example aluminium), the absorber is glued directly to the underbody panel.

Unfortunately, most of the techniques described above provide for attaching the absorber only after the moulding phase of the underbody shield is completed. These techniques, therefore, permit the attachment of the absorber to the underbody shield only when it has already been moulded and finished, with a considerable increase in costs and production times due to the further post-moulding assembly step.

Recently, a moulding technique provides for the realization of underbody shields in hybrid thermoplastic materials (for example GMT with LWRT) in which the two types of materials are inserted simultaneously in the mould, so that the finished component is made entirely with hybrid materials in a single co-moulding step. However, this technique is not flexible to any changes in the design of the component to be made and involves the construction of ad-hoc moulds with considerable economic disadvantages. For example, in the case of a possible modification of the component when the equipment is completed or in the case of producing two versions of the same component, one in thermoplastic material and another in a hybrid thermoplastic material, a mould with interchangeable inserts needs to be prepared or, alternatively, two different moulds need to be made.

One of the purposes of the present invention is to overcome the limitations of the prior art, eliminating the step subsequent to that of moulding which provides for the attachment of the accessory body to the moulded component for vehicles. This way, the time and costs of this step are eliminated, further helping to improve some thermal and mechanical characteristics of the component for vehicles. Examples of moulding techniques in the above-described field are disclosed in documents US 2009127026 A1 and US 2009220766 A1.

According to the invention, such purpose is achieved by the method according to appended claim 1 and the apparatus according to claim 11.

In particular, the component for vehicles such as an underbody, comprises a base having at least partly a layer of thermoplastic material and an accessory body in contact along a contact region with said thermoplastic layer. Moreover, said accessory body is thermoplastically joined to the base, along a contact region at least continuous in parts.

Specifically, the method for producing such a component for vehicles, comprises the step in which the base is positioned in contact with the accessory body along the region of contact with the thermoplastic layer, inside a mould for a press. Such press is suitable to form at least in part the component for vehicles thermoplastically due to the pressure exerted by the press on the mould. In addition, at least one interposition element is placed between a die or a punch of the mould for a press and the accessory body on at least a part of said contact region with the thermoplastic layer, to join said accessory body to the base at said part of the contact region.

In substance, the apparatus for making the component for vehicles comprises a press and a mould for thermoplastic moulding, engaged with the press with the addition of the interposition element having the characteristics described previously.

Preferred embodiments of the invention are defined in the dependent claims.

The characteristics and advantages of the moulding method of a component for vehicles and of the apparatus for the production of such component for vehicles according to the present invention will be evident from the description given below, by way of a non-limiting example, according to the appended drawings, wherein:
- figure 1 shows a representative diagram of a sequence of steps of the manufacturing method according to an embodiment variant of the present invention;
- figure 2a shows a representative diagram of a sequence of steps of the manufacturing method according to a second embodiment variant of the present invention;
- figure 2b shows a representative diagram of a sequence of steps of the manufacturing method according to another embodiment variant of the present invention;
- figure 2c shows a representative diagram of a sequence of steps of the manufacturing method according to a further embodiment variant of the present invention;

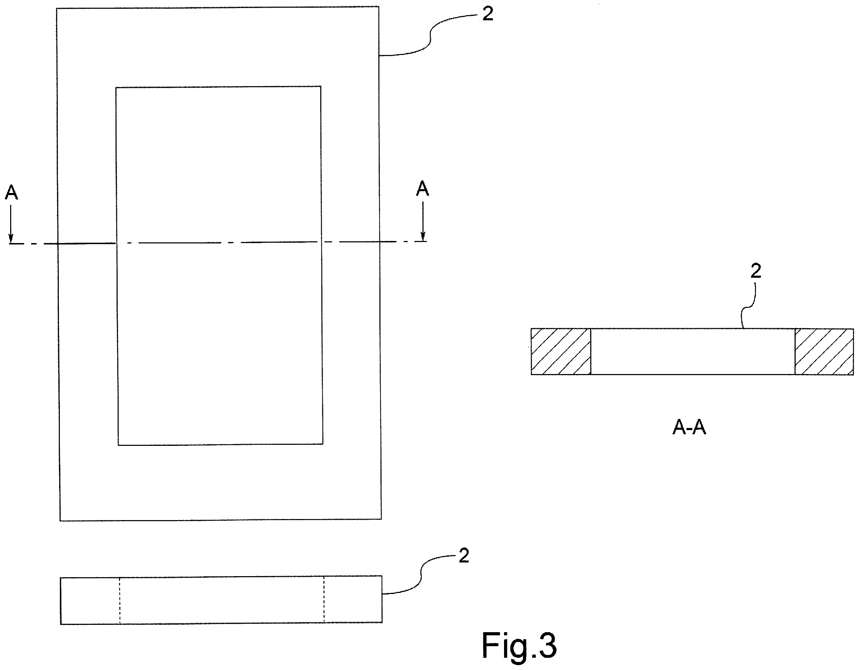

- figure 3 is a view from above, a front view and a cross-section view of an interposition element used in the present invention;

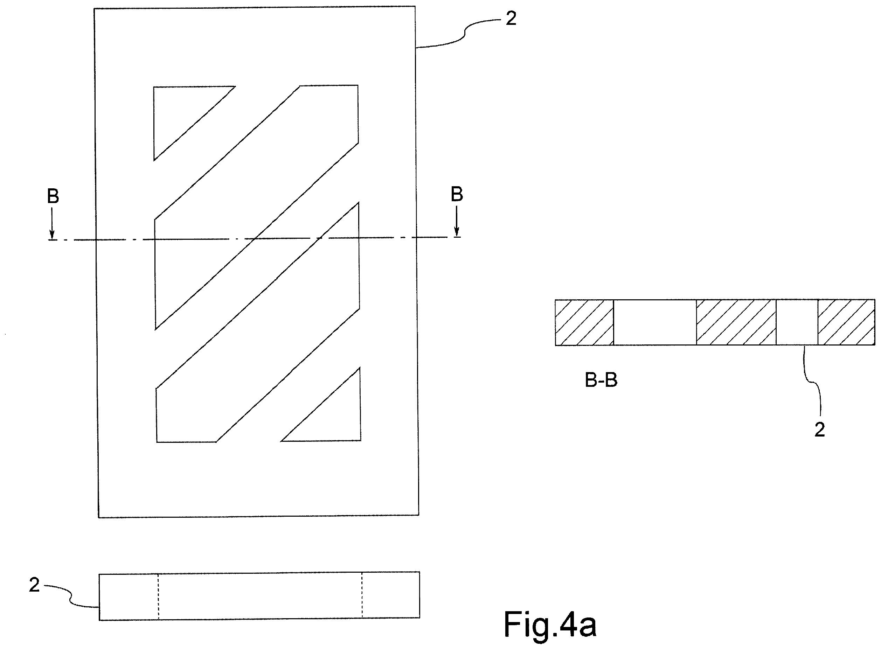

- figure 4a is a view from above, a front view and a cross-section view of an interposition element used in the present invention, in a further embodiment;

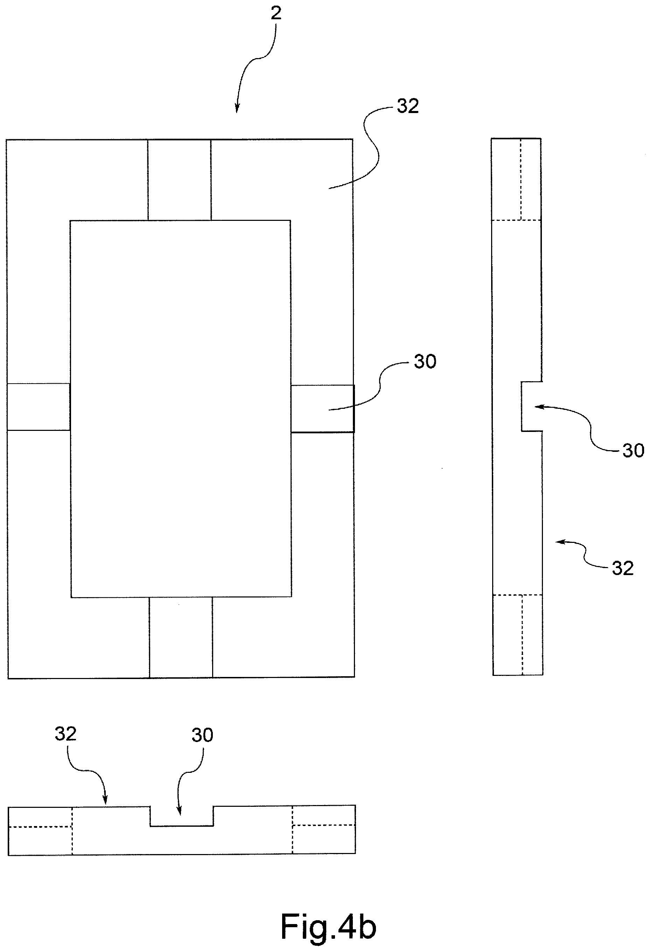

- figure 4b is a view from above, a side view and a front view of an interposition element used in the present invention, in a further embodiment;

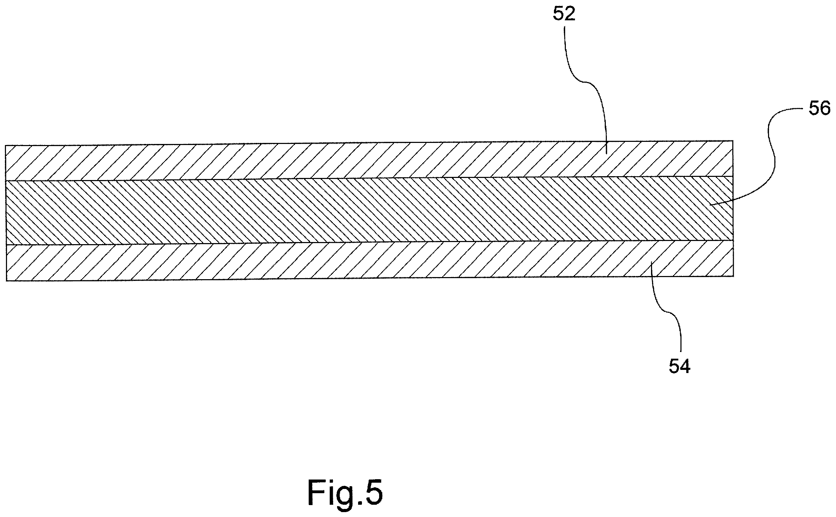

- figure 5 shows a view of an example of layers of a thermoplastic material for making a base, according to the present invention;
- figure 6a shows a view from above, a front view and a cross-section view of an example of superposing an interposition element, an accessory body and an auxiliary element, suitable to be inserted in the mould for the press, according to the present invention;
- figure 6b shows a view from above, a front view and a cross-section view of an example of superposing an interposition element, an accessory body and an auxiliary element, suitable to be inserted in the mould for the press, according to another embodiment of the present invention;

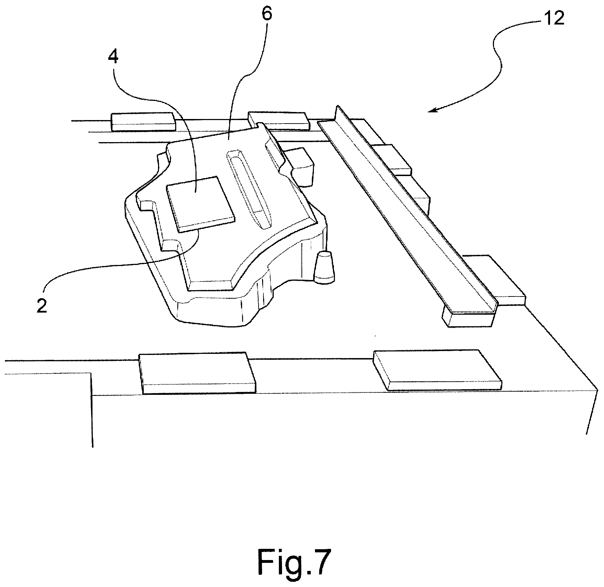

- figure 7 shows an example of positioning of the interposition element - accessory body assembly inside a mould for the moulding press, according to the present invention;
- figure 8a shows a cross-section view of a step of the moulding method according to the present invention in which the mould for the press is in a stage of almost total closure and the interposition element is positioned between the accessory body and the die of the mould;
- figure 8b shows a cross-section view of a step of the moulding method according to another embodiment of the present invention in which the mould for the press is in a stage of almost total closure and the interposition element is positioned between the accessory body and the punch of the mould;
- figure 8c shows a cross-section view of a step of the moulding method according to a further embodiment variant of the present invention in which the mould for the press is in a stage of almost total closure, the interposition element is positioned between the accessory body and the die of the mould and in addition an auxiliary element is interposed between the accessory body and the base of the component for vehicles;
- figure 8d shows a cross-section view of a step of the moulding method according to an additional embodiment of the present invention in which the mould for the press is in a stage of almost total closure and the interposition element is positioned between the die of the mould and the accessory body but not in contact with the accessory body;

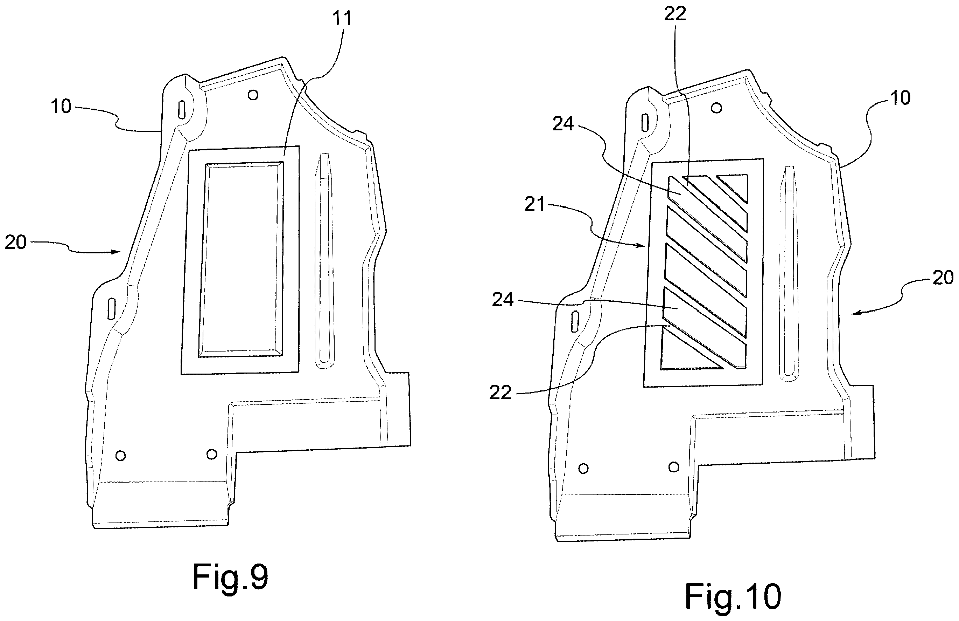

- figure 9 shows a component for vehicles manufactured according the present invention, in which the accessory body is joined to the base of the component for vehicles along a part of the contact region between the accessory body and the base;
- figure 10 shows a component for vehicles manufactured according to one embodiment of the present invention;

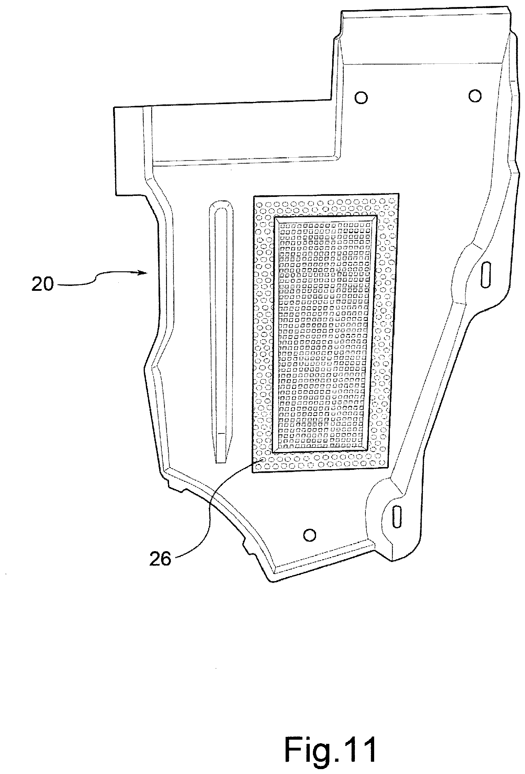

- figure 11 shows a component for vehicles manufactured according to a further embodiment of the present invention;
- figure 12a shows a cross-section of a component for vehicles manufactured according to an embodiment of the present invention;
- figure 12b, shows the magnification of a detail of the cross-section of a component for vehicles shown in figure 12a.

According to the appended drawings, reference numeral 1 globally denotes a method for producing a component for vehicles 20. Such component 20, once finished, comprises a base 10 constituted in part of a layer of thermoplastic material 52, 54 and an accessory body 4 in contact along a contact region 11 with the thermoplastic layer 52, 54.

For the realization of said component for vehicles 20 the base 10, for example consisting in part of a thermoplastic material as the LWRT, is placed in contact with the accessory body 4 along the contact region 11 with the thermoplastic layer 52, 54 inside the mould for press 12. The press is suitable to form at least in part such component for vehicles 20 thermoplastically, due to the pressure exerted by the press on the mould. An interposition element 2 is interposed, preferably in the direction of relative movement between the die 6 and the punch 8, between the die 6 of the mould and the accessory body 4 or between the punch 8 of the mould and the accessory body 4, in correspondence with at least a part of the contact region 11, to join the accessory body 4 with the base 10 at said part of the contact region 11, preferably in a substantially non-removable manner.

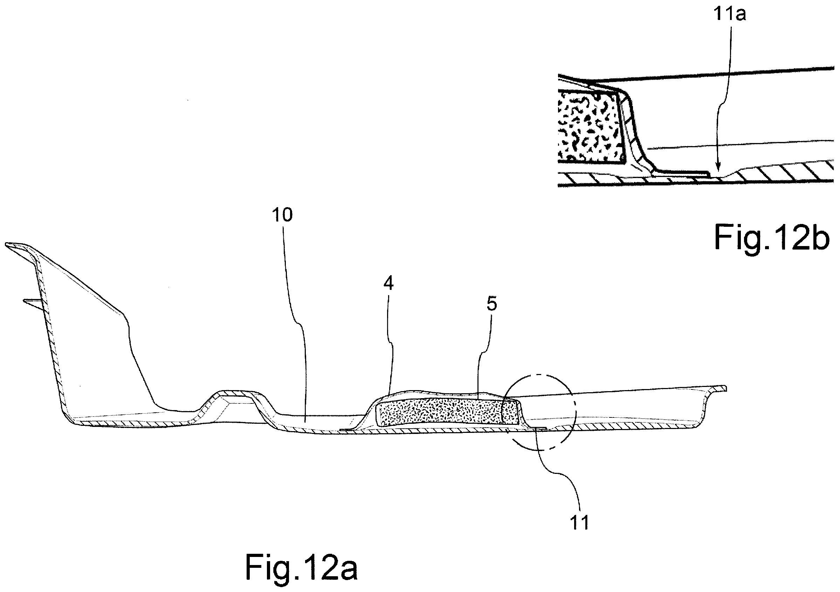

Preferably, as shown in detail in figure 12b, by effect of the overpressure, at the part of the contact region 11 in which the accessory body 4 is firmly joined to the base 10, the component for vehicles presents a depression 11a, i.e. an area having a reduced thickness compared to the regions of the component for vehicles adjacent to said part of the contact region 11.

In one embodiment of the invention, the interposition element 2 is made in one piece with the punch 8 or with the die 6 of the mould 12. For example, said interposition element 2 may be constituted of an embossed region 9 made on the die 6 or on the punch 8 of the mould 12, for example with the same material which the die 6 or the punch 12 is made of. In this case, the accessory body 4 is positioned inside the mould 12 in such a way that the part of the contact region between the accessory body 4 and the base 10 of the component for vehicles is at the embossed region 9.

In a preferred embodiment, the interposition element 2 is separable from the punch 8 or the die 6 of the mould 12. For example, said interposition element 2 may be a frame or solid object in wood or metal material or any material holding its rigidity at least at temperatures between 100°C and 200°C, of any shape.

In the case in which the interposition element 2 is made in one piece with the die or the punch of the mould, it is preferably necessary for the accessory body to be preheated before being inserted inside the mould or, alternatively, it is preferable to provide heat generator means suitable to heat only the region of the interposition element 2, leaving the remaining area of the punch or the die at a lower temperature (for example between 20°C and 30°C) .

The interposition element 2 is positioned in such a way as to create an overpressure at the part of the contact region 11 between the thermoplastic layer 52, 54 of the base 10 and the accessory body 4 and make it possible to join said accessory body 4 with the base 10 at the part of the contact region 11.

The method 1, preferably comprises the step in which the accessory body 4 joins firmly with the base due to the pressure exerted by the press on the mould 12 and by the latter transferred along the part of the contact region 11 by means of the interposition element 2. This ensures that, the accessory body, such as an acoustic or heat absorber, is welded to the base in a single moulding step, without the need to perform the operation at a stage after the moulding of the base. The co-moulding of the base and of the accessory body thus guarantees a considerable saving of labour costs and of components (e.g. the gluing components, welding equipment etc.)

In a step of the method 1 it is also possible to provide for the creation of concavities 22 and convexities 24 on the accessory body 4 by means of the interposition element 2, so as to convey the sound absorption or heat absorption, for example with the further advantage of improving the characteristics of sound absorption compared to those which said material would have in the absence of said concavities and convexities.

Preferably, a step of the method 1 provides that the heat generated by the heat generation means, for example present on the interposition element 2 in the form of a thermal resistance, is transferred in a localised manner to the accessory body 4 by means of the interposition element 2.

Preferably, the heat generation means comprise, for example, an oven or thermal resistances suitable to heat the interposition element or the accessory body directly. This way, for example, once the interposition element or the accessory body has reached a predefined temperature (for example between 170°C and 180°C), it can be positioned on the base 10 of the component for vehicles 20 inside the mould 12 before the press proceeds with the subsequent thermoforming step, in which the heat accumulated on the interposition element 2 or on the accessory body 4 together with the pressure generated by the press permits the welding of the accessory body 4 to the base 10 along the part of the contact region 11.

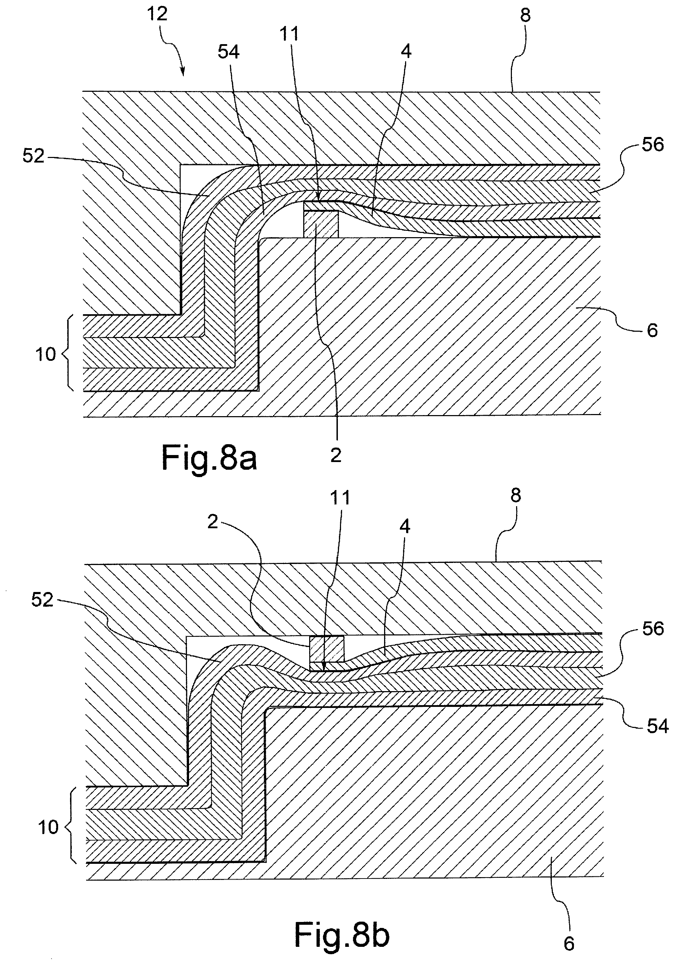

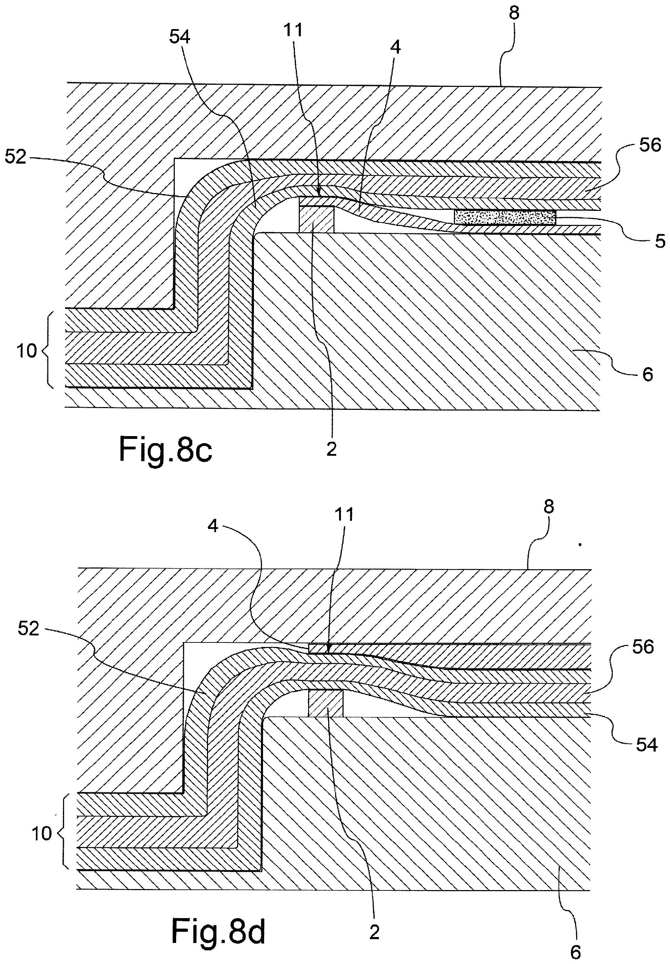

To increase the noise/heat absorption characteristics for example an auxiliary element 5 may be positioned between the accessory body 4 and the base 10, at least partly inside the part of the contact region 11. This auxiliary element 5, may thus also be constituted of a non-thermoplastic material or of a thermoplastic material not compatible with co-moulding on the material which the base 11 consists of, inasmuch as it is not essential for it to be welded thermoplastically to the base, but may remain trapped between the accessory body welded to the base and said base, as shown in Figures 8c and 12.

The method 1 further comprises a step in which, the accessory body 4 is locked to the base 10 by means of holes 26 made on said accessory body 4. For example, during the moulding step the pressure exerted by the press on the mould allows the thermoplastic material of the base to penetrate inside said holes made on the accessory body in such a way as to fix the accessory body to the base mechanically, once the thermoplastic material has cooled. This way it is also possible to co-mould an accessory body in a metal material, such as for example acoustic and/or heat absorbers in aluminium, provided with an appropriate pattern of holes, without the need to provide for an additional gluing step. In this case, for example, the interposition element 2 may be provided with further holes at the holes 26 on the accessory body 4 suitable to allow the escape of the thermoplastic material through the holes 26 of the accessory body 4 towards the face of the accessory body not in contact with the base 10.

Advantageously, moreover, the presence of the interposition element 2 makes it possible for example to use said interposition element 2 as a movement tray for the accessory body 4. In a step of the method, therefore, it is possible to prepare the accessory body 4 on the interposition element 2 and to use said interposition element 2 for example as a guide for centring the accessory body inside the mould 12 of the press.

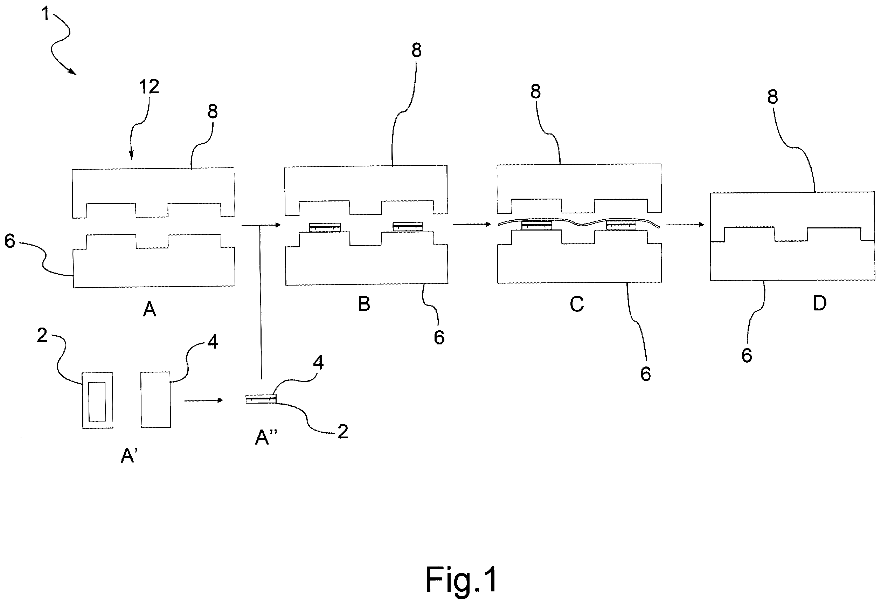

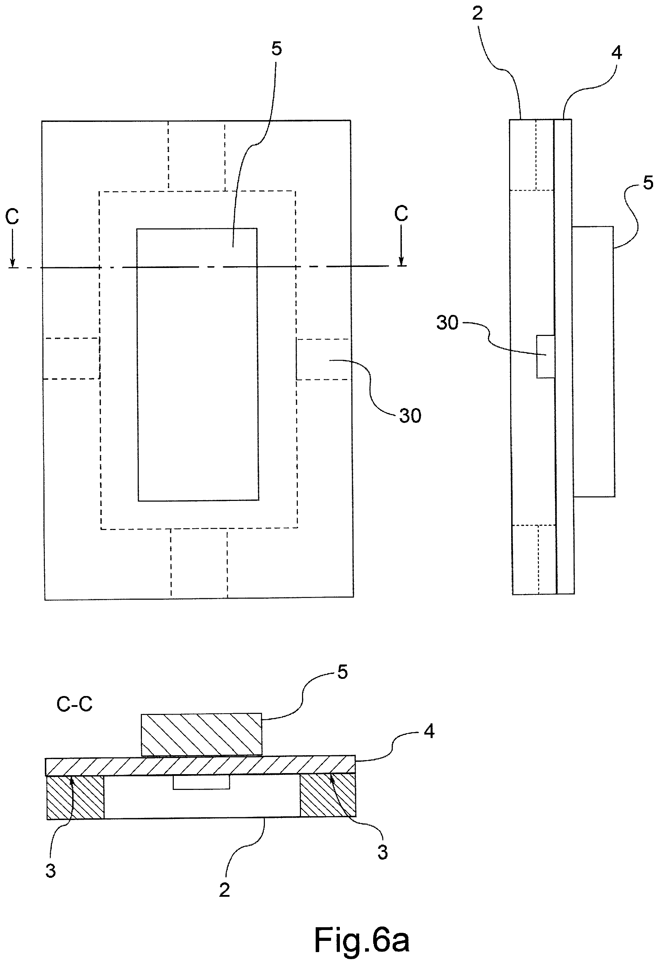

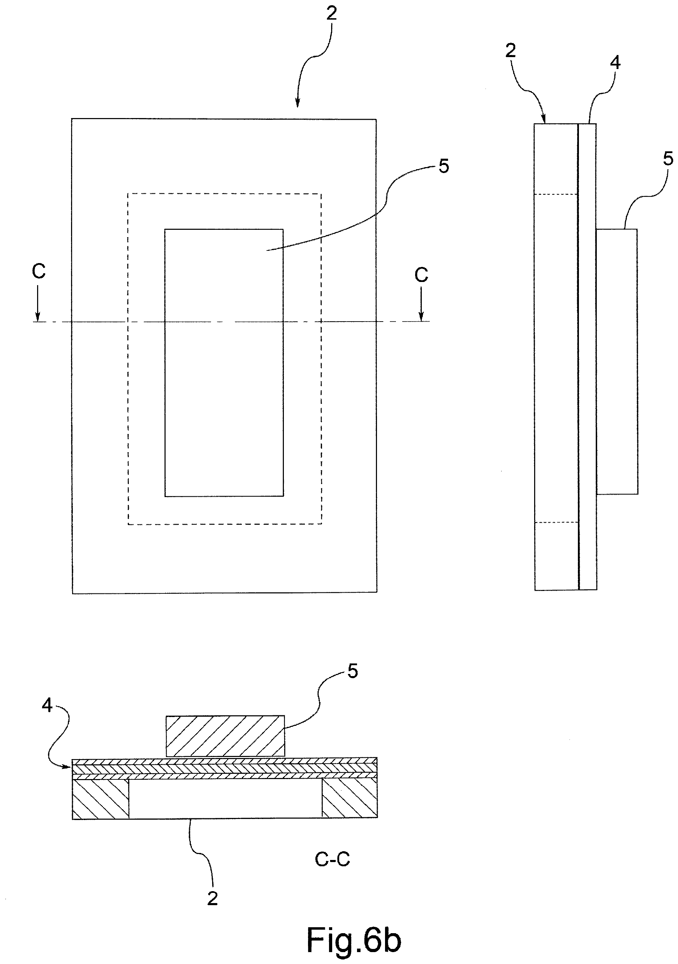

A detailed example of the steps constituting the method according to the present invention is shown in figure 1. Preferably, the method comprises the steps of:
- opening the mould of the press 12 (A);
- preparing the interposition element 2 and accessory body 4 (A');
- positioning the accessory body 4 on the interposition element 2 (A"); in this step, it is also possible to add the auxiliary element 5 on the accessory body 4, as shown in figures 6a and 6b;
- inserting the interposition element-accessory body assembly inside the mould 12 (B);
- positioning the sheet of thermoplastic material constituting the base 10 in contact with the surface of the accessory body 4 not in contact with the interposition element 2, along a contact region 11 (C); in this step C the accessory body 4 is in contact on one side with the contact region with the sheet of thermoplastic material constituting the base 10 and on the other side with the surface of the interposition element 2 not in contact with the die 6 or punch 8 of the mould.
- closing the mould of the press by the press and thermoforming the component for vehicles (D). During this step, for example, the heat accumulated on the accessory body 4 or on the interposition element 2, together with the pressure exerted by the press, makes it possible to weld the accessory body 4 to the base 10 along the part of the contact region 11.

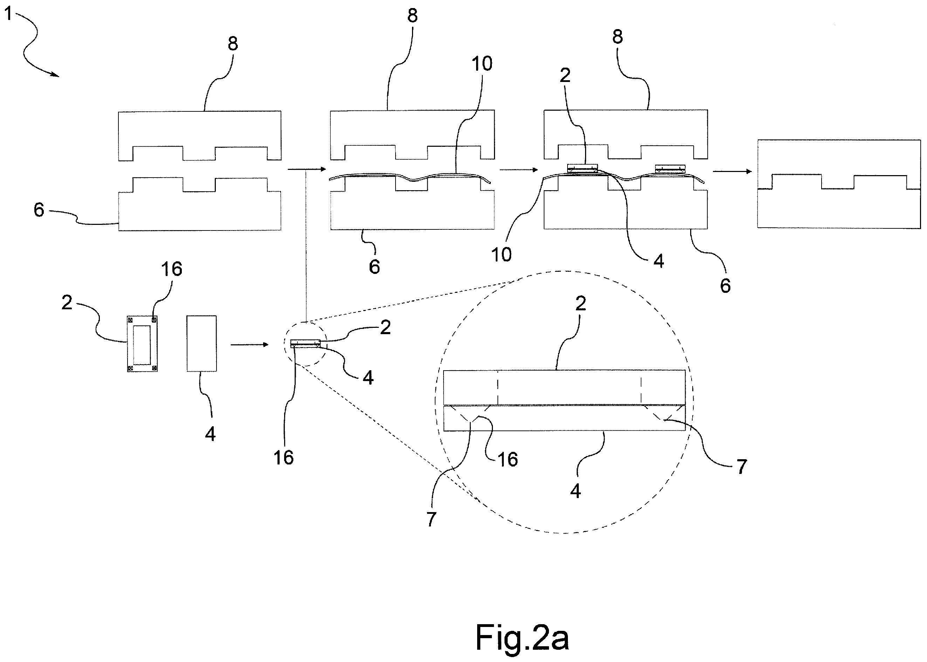

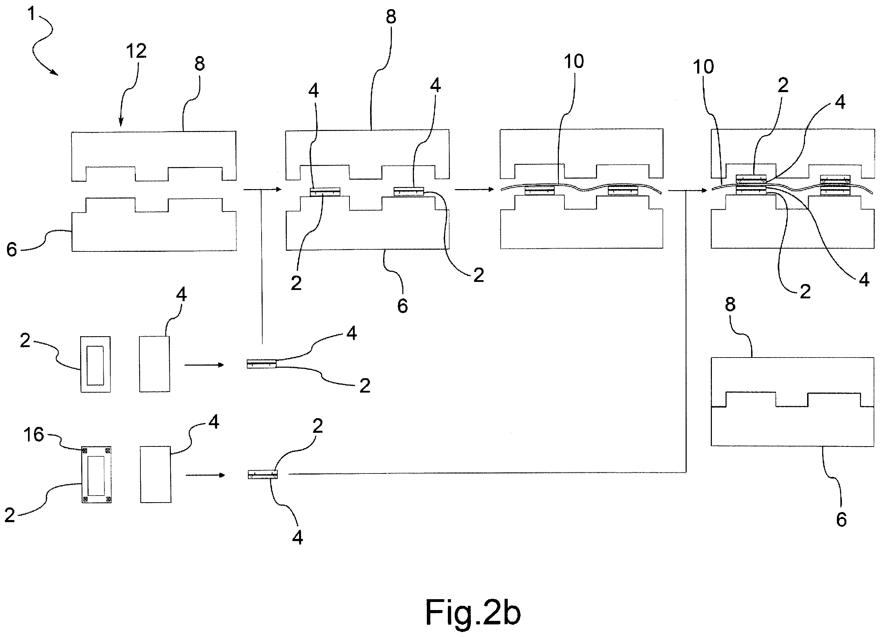

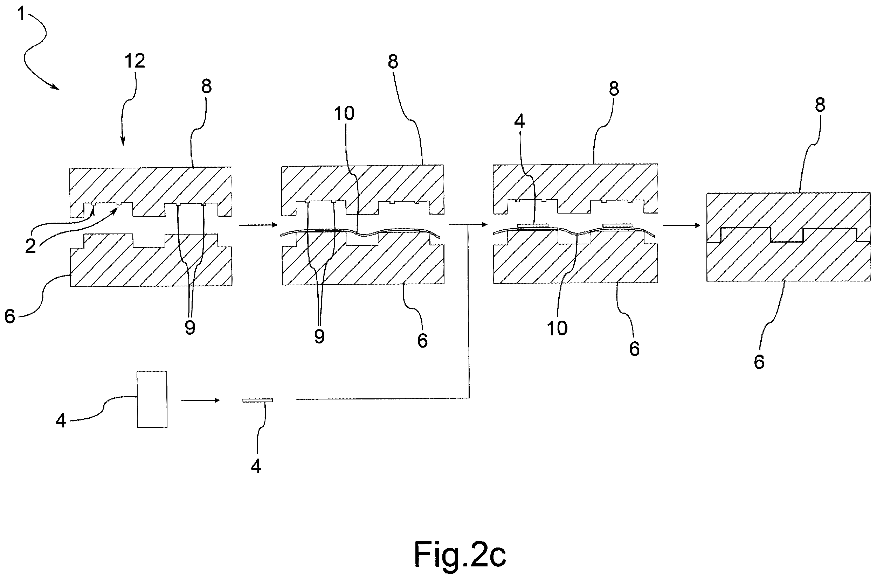

Other detailed examples of the steps constituting the method according to the present invention are shown in figures 2a, 2b and 2c.

Preferably, the base 10 of the component for vehicles 20 is heated in an oven (for example at a temperature of around 170-180°C in the case of a LWRT material) before being inserted inside the mould 12. Moreover, even the interposition element 2 can be heated by means of the heat generation means (ovens, thermic resistances..) before being inserted inside the mould 12(for example during the preparation step of the interposition element 2 and accessory body 4 (A')), or when already present inside the mould 12. This way, said interposition element 2 is able to convey the heat accumulated onto a part of the contact region 11 between lower temperature allow the LWRT material to cool and create the stiffer (and reduced thickness) structural areas of the component for vehicles.

Where, instead, for example, the interposition element 2 is present at a higher temperature a heat sealing is created between the material of the base 10 and the accessory body 4, along the part of the contact region 11, thanks to the region of overpressure created with the interposition element 2 and to the heat transferred from the interposition element 2 onto the accessory body 4.

The interposition element 2, positioned between the die 6 or the punch 8 of the mould for the press 12 and the accessory body 4, on at least a part of the contact region 11 between the accessory body 4 and the base 10 of the component for vehicles 20, is made from materials with greater rigidity than the materials which the base 10, the accessory body 4 and the auxiliary element 5 are made of. For example, said interposition element 2 is made in wood or in metal material, such as aluminium or special aluminium alloys or any material which maintains its stiffness at temperatures above 100°C, such as SMC (Sheet Moulding Compounds) thermosetting materials.

Moreover, the interposition element 2 comprises a plurality of regions 30, 32 with variable thicknesses so that, established a moulding pressure for the materials with greater rigidity than the materials which the base 10, the accessory body 4 and the auxiliary element 5 are made of. For example, said interposition element 2 is made in wood or in metal material, such as aluminium or special aluminium alloys or any material which maintains its stiffness at temperatures above 100°C, such as SMC (Sheet Moulding Compounds) thermosetting materials.

Moreover, the interposition element 2 comprises a plurality of regions 30, 32 with variable thicknesses so that, established a moulding pressure for the thermoforming of the component for vehicles 20, said regions 30, 32 are adapted to create an overpressure on the accessory body 4, said overpressure depending on the thickness of each region 30, 32 and on the contact area 3 of each region with the accessory body 4.

The regions of variable thickness 30, 32 of the interposition element 2 may comprise varying thicknesses depending on the thickness of the material of the base 10, for example, said thicknesses may be less than the thickness of the material of the base (before moulding) or may vary between 2 mm and 10 mm, in the direction substantially parallel to the direction of movement of the punch 8 on the die 6. This way, depending on the pressure exerted on the accessory body by the regions of varying thicknesses 30, 32, concavities and convexities are created on the accessory body 4 and hence different mechanical sound and/or heat absorption properties.

In one embodiment, the interposition element 2 further comprises mechanical means 16, for example tips 7 or hooks, to lock the accessory body 4 to the interposition element 2.

In another embodiment, moreover, the interposition element 2 is constituted at least in part of a material suitable to conduct heat (e.g. aluminium) and to transfer said heat in a localised manner to the accessory body 4, so as to improve the welding between said accessory body 4 and the base 10 of the component for vehicles. For example, an optimal weld is achieved with temperatures of the interposition element above 100°C.

The component for vehicles 20, manufactured according to the present invention, is made with a base in LWRT (LightWeight Reinforced Thermoplastic) material onto which an accessory body constituted, for example at least in part of synthetic material such as polypropylene, polyethylene, polyurethane, or polyethylene terephthalate or in metal materials such as aluminium and its alloys, is co-moulded.

An example of a component for vehicle 20 manufactured according to the present invention is an underbody shield, wherein the accessory body for example is represented by an acoustic absorber welded simultaneously with the moulding step of the underbody shield.

The accessory body 4 may be positioned only on at least one localised region 21 of the base 10.

Preferably, said accessory body 4 is suitable to have sound and/or heat absorption characteristics, for example with the advantage of absorbing the noise and heat generated by a thermal engine of a motor vehicle or the noise from the rolling of the tyres on the road of any wheeled vehicle or by the underbody airflow.

The component for vehicles 20 may have at least one auxiliary element 5 placed between the accessory body 4 and the base 10, at least in part inside the contact region 11 between said accessory body 4 and the base 10, so as to vary the sound and/or heat absorption 20. For example, the auxiliary element 5 may be made as a parallelepiped in synthetic material (for example polyurethane) placed between the accessory body 4 and the base 10 so as to be trapped between said accessory body 4 and the base 10 of the component for vehicles 20, inside the weld region which acts as boundary of the trap.

Preferably, therefore, the auxiliary element 5 is suitable to have soundproofing or heat absorption characteristics. Said sound or heat absorption characteristics can be varied thanks to the presence of concavities 22 and convexities 24 on the accessory body 4, wherein said concavities 22 and convexities 24 make it possible to convey the sound absorption depending on their geometry.

The apparatus making the component for vehicles described above comprises a press and a mould 12 for thermoplastic moulding, engaged with the press, and an interposition element 2, for example having the characteristics described in the previous paragraphs and intended to be placed between the die 6 or punch 8 of the mould 12 and the accessory body 4, on at least part of the contact region between the accessory body 4 and the base 10 of the component for vehicles.

As may be seen, advantageously, the method according to the present invention makes it possible to co-mould accessory bodies, such as acoustic and thermal absorbers, on a component for vehicles made from thermoplastic material in a single moulding step, without further post-moulding welding steps. Furthermore, in the case in which the interposition element is separable from the die or punch of the mould, the method according to the present invention makes it possible to co-mould absorbers on a component for vehicles made of thermoplastic material without any structural modification of the mould, compared to a solution without absorber, and at the same time allows the maximum flexibility of design and implementation. In the latter case, even more advantageously, any changes to the geometry of the accessory body during the design phase do not therefore require a large investment in modifications to the equipment, thus facilitating the development and testing phase (for example, with the same mould different versions of a single moulded object may be made by combining different types of accessory bodies, according to the needs of the designer).

It is clear that a person skilled in the art may make modifications to the invention described above so as to satisfy specific and contingent requirements, as long as they are contained within the scope of protection as defined by the following claims.

## Claims

1. Method for producing a component for vehicles (1), wherein said finished component (20) includes a base (10) having at least partly a layer of thermoplastic material (52, 54) and an accessory body (4) in contact along a contact region (11) with said thermoplastic layer (52, 54), wherein for the realization of said component for vehicles (20)
the base (10) is positioned in contact with the accessory body (4) along the contact region (11) with said thermoplastic layer (52, 54), inside a mould for press (12), said press being adapted to form at least partly thermoplastically said component for vehicles (20), due to the pressure exerted on the mould (12), and
at least one interposition element (2) is interposed between a die (6) or a punch (8) of the mould for press (12) and said accessory body (4), at at least a part of the contact region (11), for joining said accessory body (4) with said base (10) at said part of the contact region (11), wherein the interposition element (2) is positioned in such a way as to create an overpressure at said part of the contact region (11) between the thermoplastic layer (52, 54) of the base (10) and the accessory body (4).

2. Method (1) according to claim 1, which comprises a step in which the heat generated by heat generation means is transferred in a localized manner on the accessory body (4) by means of the interposition element, to allow the heat sealing of the accessory body (4) on the base (10).

3. Method (1) according to any one of the preceding claims, which comprises a step in which the interposition element (2) or the accessory body (4) is heated to a predefined temperature.

4. Method (1) according to any one of the preceding claims, wherein at least one auxiliary element (5) is positioned between the accessory body (4) and the base (10), at least partly within the part of the contact region (11).

5. Method (1) according to any one of the preceding claims, comprising the step in which the accessory body (4) joins firmly with the base due to the pressure exerted by the press on the mould (12) and from the latter transferred along the part of the contact region (11) by means of the interposition element (2).

6. Method (1) according to any one of the preceding claims, wherein once the interposition element (2) has reached a predefined temperature, said interposition element (2) is positioned on the base (10) of the component for vehicles (20) inside the mould (12) before the press proceeds to the subsequent thermoforming step, in which the heat accumulated on the interposition element (2) or on the accessory body (4) together with the pressure generated by the press allow welding the accessory body (4) on the base (10) along the part of the contact region (11).

7. Method according to any of the preceding claims, wherein the base (10) is made of LWRT (Lightweight Reinforced Thermoplastic) material.

8. Method according to any of the preceding claims, wherein said component for vehicle is an underbody shield.

9. Method according to any of the preceding claims, comprising the step of adding an auxiliary element (5) on the accessory body (4) at least partly within the contact region (11), so that said auxiliary element (5) results positioned between the accessory body (4) and the base (10) of the produced component for vehicle.

10. Method according to any of the preceding claims, comprising the step of locking the accessory body (4) to the base (10) by means of holes (26) made on said accessory body (4), thanks to the effect of penetration of part of the layer of thermoplastic material (52, 56) inside said plurality of holes (26).

11. Apparatus for manufacturing a component for vehicles (20), wherein said component for vehicles (20) comprises a base (10) having at least partly a thermoplastic material layer (52, 54) and an accessory body (4) intended to be positioned in contact with the base (10) along a contact region (11) with said layer of thermoplastic material (52, 54) inside a mould for press (12), and wherein said apparatus comprises:
- a press and a mould (12) for thermoplastic moulding, engaged with the press;
- an interposition element (2) adapted to be interposed between a die (6) or a punch (8) of the mould (12) and said accessory body (4), at at least a part of the contact region (11), for joining said accessory body (4) with said base (10) at said part of the contact region (11), said interposition element (2) being adapted to be positioned in such a way as to create an overpressure at said part of the contact region (11) between the layer of thermoplastic material (52, 54) of the base (10) and the accessory body (4) .

12. Apparatus according to claim 11, wherein the interposition element (2) is a frame of any shape being made from materials with greater rigidity than the materials which the base (10), the accessory body (4) and the auxiliary element (5) are made of.

13. Apparatus according to claim 11 or 12, wherein the interposition element (2) comprises a plurality of regions (30, 32) with variable thicknesses so that, established a moulding pressure for the thermoforming of the component for vehicles (20), said regions (30, 32) are adapted to create an overpressure on the accessory body (4), said overpressure depending on the thickness of each region (30, 32) and on the contact area (3) of each region (30, 32) with the accessory body (4).

14. Apparatus according to any of the claims from 11 to 13, wherein the interposition element (2) comprises mechanical means (16) to lock the accessory body (4) on said interposition element (2).

15. Apparatus according to any of the claims from 11 to 14, wherein the interposition element (2) is made integral with the die (6) or the punch (8) of the mould for press (12) .

16. Apparatus according to any of the claims from 11 to 14, wherein the interposition element (2) is separable from the die (8) or the punch (6) of the mould (12).

17. Apparatus according to any of the claims from 11 to 16, wherein the interposition element (2) is a frame of any material that retains its rigidity at temperatures between 100 °C and 200 °C, of any shape.

## Patentansprüche

1. Verfahren zum Herstellen einer Komponente für Fahrzeuge (1), wobei die fertiggestellte Komponente (20) eine Basis (10), welche wenigstens teilweise eine Schicht von thermoplastischem Material (52, 54) aufweist, und einen Zusatzkörper (4) in Kontakt entlang eines Kontaktbereichs (11) mit der thermoplastischen Schicht (52, 54) umfasst, wobei für die Realisierung der Komponente für Fahrzeuge (20) die Basis (10) in Kontakt mit dem Zusatzkörper (4) entlang des Kontaktbereichs (11) mit der thermoplastischen Schicht (52, 54) innerhalb einer Form für eine Presse (12) positioniert wird, wobei die Presse dazu eingerichtet ist, die Komponente für Fahrzeuge (20) aufgrund des Drucks, welcher an der Form (12) ausgeübt wird, wenigstens teilweise thermoplastisch zu formen, und wenigstens ein Zwischenelement (2) zwischen einem Formkörper (6) oder einem Stempel (8) der Form für eine Presse (12) und dem Zusatzkörper (4) an wenigstens einem Teil des Kontaktbereichs (11) angeordnet wird, um den Zusatzkörper (4) mit der Basis (10) an dem Teil des Kontaktbereichs (11) zu verbinden, wobei das Zwischenelement (2) in einer derartigen Weise positioniert wird, um einen Überdruck an dem Teil des Kontaktbereichs (11) zwischen der thermoplastischen Schicht (52, 54) der Basis (10) und dem Zusatzkörper (4) zu erzeugen.

2. Verfahren (1) nach Anspruch 1, welches einen Schritt umfasst, in welchem die Hitze, welche durch Hitzeerzeugungsmittel erzeugt wird, in einer lokalisierten Weise auf den Zusatzkörper (4) mittels des Zwischenelements übertragen wird, um der Hitze zu erlauben, den Zusatzkörper (4) an der Basis (10) abzudichten.

3. Verfahren (1) nach einem der vorhergehenden Ansprüche, welches einen Schritt umfasst, in welchem das Zwischenelement (2) oder der Zusatzkörper (4) auf eine vordefinierte Temperatur erwärmt wird.

4. Verfahren (1) nach einem der vorhergehenden Ansprüche, wobei wenigstens ein Hilfselement (5) zwischen dem Zusatzkörper (4) und der Basis (10) wenigstens teilweise innerhalb des Teils des Kontaktbereichs (11) positioniert wird.

5. Verfahren (1) nach einem der vorhergehenden Ansprüche, umfassend den Schritt, in welchem sich der Zusatzkörper (4) aufgrund des Drucks, welcher durch die Presse an der Form (12) ausgeübt wird und von der letzteren entlang des Teils des Kontaktbereichs (11) durch das Zwischenelement (2) übertragen wird, fest mit der Basis verbindet.

6. Verfahren (1) nach einem der vorhergehenden Ansprüche, wobei, sobald das Zwischenelement (2) eine vordefinierte Temperatur erreicht hat, dass Zwischenelement (2) an der Basis (10) der Komponente für Fahrzeuge (20) innerhalb der Form (12) positioniert wird, bevor die Presse zu dem nachfolgenden Schritt eines Thermoformens fortschreitet, in welchem die an dem Zwischenelement (2) oder an dem Zusatzkörper (4) gesammelte Hitze zusammen mit dem Druck, welcher durch die Presse erzeugt wird, ein Schweißen des Zusatzkörpers (4) an die Basis (10) entlang des Teils des Kontaktbereichs (11) erlaubt.

7. Verfahren nach einem der vorhergehenden Ansprüche, wobei die Basis (10) aus LWRT (Lightweight Reinforced Thermoplastic) Material hergestellt wird.

8. Verfahren nach einem der vorhergehenden Ansprüche, wobei die Komponente für ein Fahrzeug ein Unterkörper-Schild ist.

9. Verfahren nach einem der vorhergehenden Ansprüche, umfassend den Schritt eines Hinzufügens eines Hilfselements (5) an den Zusatzkörper (4) wenigstens teilweise innerhalb des Kontaktbereichs (11), so dass sich das Hilfselement (5) zwischen dem Zusatzkörper (4) und der Basis (10) der produzierten Komponente für ein Fahrzeug positioniert ergibt.

10. Verfahren nach einem der vorhergehenden Ansprüche, umfassend den Schritt eines Verriegelns des Zusatzkörpers (4) an der Basis (10) mittels Löcher (26), welche an dem Zusatzkörper (4) ausgebildet sind, Dank des Effekts eines Eindringens eines Teils der Schicht aus thermoplastischem Material (52, 56) in die Mehrzahl von Löchern (26).

11. Vorrichtung zum Herstellen einer Komponente für Fahrzeuge (20), wobei die Komponente für Fahrzeuge (20) eine Basis (10), welche wenigstens teilweise eine Schicht von thermoplastischem Material (52, 54) aufweist, und einen Zusatzkörper (4) umfasst, welcher dazu bestimmt ist, in Kontakt mit der Basis (10) entlang eines Kontaktbereichs (11) mit der Schicht aus thermoplastischem Material (52, 54) innerhalb einer Form für eine Presse (12) positioniert zu werden, und wobei die Vorrichtung umfasst:
- eine Presse und eine Form (12) für thermoplastisches Formen, im Eingriff mit der Presse;
- ein Zwischenelement (2), welches dazu eingerichtet ist, zwischen einem Formkörper (6) oder einem Stempel (8) der Form (12) und dem Zusatzkörper (4) an wenigstens einem Teil des Kontaktbereichs (11) angeordnet zu sein, um den Zusatzkörper (4) mit der Basis (10) an dem Teil des Kontaktbereichs (11) zu verbinden, wobei das Zwischenelement (2) dazu eingerichtet ist, in einer derartigen Weise positioniert zu werden, um einen Überdruck an dem Teil des Kontaktbereichs (11) zwischen der Schicht aus thermoplastischem Material (52, 54) der Basis (10) und dem Zusatzkörper (4) zu erzeugen.

12. Vorrichtung nach Anspruch 11, wobei das Zwischenelement (2) ein Rahmen von einer beliebigen Form ist, welcher aus Materialien mit einer größeren Steifigkeit als die Materialien hergestellt ist, aus welchen die Basis (10), der Zusatzkörper (4) und das Hilfselement (5) hergestellt sind.

13. Vorrichtung nach Anspruch 11 oder 12, wobei das Zwischenelement (2) eine Mehrzahl von Bereichen (30, 32) mit variablen Dicken umfasst, so dass, bei einem aufgebauten Formungsdruck für das Thermoformen der Komponente für Fahrzeuge (20), die Bereiche (30, 32) dazu eingerichtet sind, einen Überdruck an dem Zusatzkörper (4) zu erzeugen, wobei der Überdruck von der Dicke von jedem Bereich (30, 32) und dem Kontaktbereich (3) von jedem Bereich (30, 32) mit dem Zusatzkörper (4) abhängt.

14. Vorrichtung nach einem der Ansprüche 11 bis 13, wobei das Zwischenelement (2) mechanische Mittel (16) umfasst, um den Zusatzkörper (4) an dem Zwischenelement (2) zu verriegeln.

15. Vorrichtung nach einem der Ansprüche 11 bis 14, wobei das Zwischenelement (2) integral mit dem Formkörper (6) oder dem Stempel (8) der Form für eine Presse (12) hergestellt ist.

16. Vorrichtung nach einem der Ansprüche 11 bis 14, wobei das Zwischenelement (2) von dem Formkörper (8) oder dem Stempel (6) der Form (12) trennbar ist.

17. Vorrichtung nach einem der Ansprüche 11 bis 16, wobei das Zwischenelement (2) ein Rahmen eines beliebigen Materials ist, welcher dessen Steifigkeit bei Temperaturen zwischen 100°C und 200°C von einer beliebigen Form beibehält.

## Revendications

1. Procédé de production d'un composant pour véhicules (1), dans lequel ledit composant fini (20) inclut une base (10) ayant au moins partiellement une couche de matériau thermoplastique (52, 54) et un corps accessoire (4) en contact le long d'une région de contact (11) avec ladite couche thermoplastique (52, 54), dans lequel pour la réalisation dudit composant pour véhicules (20)
la base (10) est positionnée en contact avec le corps accessoire (4) le long de la région de contact (11) avec ladite couche thermoplastique (52, 54), à l'intérieur d'un moule pour presse (12), ladite presse étant adaptée à former au moins partiellement thermoplastiquement ledit composant pour véhicules (20), du fait de la pression exercée sur le moule (12), et
au moins un élément d'interposition (2) est interposé entre une matrice (6) ou un poinçon (8) du moule pour presse (12) et ledit corps accessoire (4), au niveau d'au moins une partie de la région de contact (11), pour assembler ledit corps accessoire (4) avec ladite base (10) au niveau de ladite partie de la région de contact (11), dans lequel l'élément d'interposition (2) est positionné de façon à créer une surpression au niveau de ladite partie de la région de contact (11) entre la couche thermoplastique (52, 54) de la base (10) et le corps accessoire (4).

2. Procédé (1) selon la revendication 1, qui comprend une étape dans laquelle la chaleur générée par des moyens de génération de chaleur est transférée de manière localisée sur le corps accessoire (4) au moyen de l'élément d'interposition, pour permettre le scellement thermique du corps accessoire (4) sur la base (10).

3. Procédé (1) selon l'une quelconque des revendications précédentes, qui comprend une étape dans laquelle l'élément d'interposition (2) ou le corps accessoire (4) est chauffé à une température prédéfinie.

4. Procédé (1) selon l'une quelconque des revendications précédentes, dans lequel au moins un élément auxiliaire (5) est positionné entre le corps accessoire (4) et la base (10), au moins partiellement dans la partie de la région de contact (11).

5. Procédé (1) selon l'une quelconque des revendications précédentes, comprenant l'étape dans laquelle le corps accessoire (4) s'assemble fermement avec la base du fait de la pression exercée par la presse sur le moule (12) et transférée à partir de celui-ci le long de la partie de la région de contact (11) au moyen de l'élément d'interposition (2).

6. Procédé (1) selon l'une quelconque des revendications précédentes, dans lequel, une fois que l'élément d'interposition (2) a atteint une température prédéfinie, ledit élément d'interposition (2) est positionné sur la base (10) du composant pour véhicules (20) à l'intérieur du moule (12) avant que la presse ne passe à l'étape suivante de thermoformage, dans laquelle la chaleur accumulée sur l'élément d'interposition (2) ou sur le corps accessoire (4) ainsi que la pression générée par la presse permettent le soudage du corps accessoire (4) sur la base (10) le long de la partie de la région de contact (11).

7. Procédé selon l'une quelconque des revendications précédentes, dans lequel la base (10) est faite d'un matériau thermoplastique renforcé léger (LWRT).

8. Procédé selon l'une quelconque des revendications précédentes, dans lequel ledit composant pour véhicule est un protecteur de soubassement de carrosserie.

9. Procédé selon l'une quelconque des revendications précédentes, comprenant l'étape consistant à ajouter un élément auxiliaire (5) sur le corps accessoire (4) au moins partiellement dans la région de contact (11), de sorte que ledit élément auxiliaire (5) apparaisse positionné entre le corps accessoire (4) et la base (10) du composant produit pour véhicule.

10. Procédé selon l'une quelconque des revendications précédentes, comprenant l'étape consistant à verrouiller le corps accessoire (4) à la base (10) au moyen d'orifices (26) pratiqués sur ledit corps accessoire (4), grâce à l'effet de pénétration d'une partie de la couche de matériau thermoplastique (52, 56) à l'intérieur de ladite pluralité d'orifices (26).

11. Appareil pour la fabrication d'un composant pour véhicules (20), dans lequel ledit composant pour véhicules (20) comprend une base (10) ayant au moins partiellement une couche de matériau thermoplastique (52, 54) et un corps accessoire (4) destiné à être positionné en contact avec la base (10) le long d'une région de contact (11) avec ladite couche de matériau thermoplastique (52, 54) à l'intérieur d'un moule pour presse (12), et dans lequel ledit appareil comprend :
une presse et un moule (12) pour moulage thermoplastique, en prise avec la presse ;
un élément d'interposition (2) adapté pour être interposé entre une matrice (6) ou un poinçon (8) du moule (12) et ledit corps accessoire (4), au niveau d'au moins une partie de la région de contact (11), pour assembler ledit corps accessoire (4) avec ladite base (10) au niveau de ladite partie de la région de contact (11), ledit élément d'interposition (2) étant adapté à être positionné de façon à créer une surpression au niveau de ladite partie de la région de contact (11) entre la couche de matériau thermoplastique (52, 54) de la base (10) et le corps accessoire (4).

12. Appareil selon la revendication 11, dans lequel l'élément d'interposition (2) est un cadre de forme quelconque fait à partir de matériaux présentant une rigidité plus élevée que les matériaux dont sont faits la base (10), le corps accessoire (4) et l'élément auxiliaire (5).

13. Appareil selon la revendication 11 ou 12, dans lequel l'élément d'interposition (2) comprend une pluralité de régions (30, 32) d'épaisseurs variables de sorte que, une fois établie une pression de moulage pour le thermoformage du composant pour véhicules (20), lesdites régions (30, 32) sont adaptées pour créer une surpression sur le corps accessoire (4), ladite surpression dépendant de l'épaisseur de chaque région (30, 32) et de la surface de contact (3) de chaque région (30, 32) avec le corps accessoire (4).

14. Appareil selon l'une quelconque des revendications 11 à 13, dans lequel l'élément d'interposition (2) comprend des moyens mécaniques (16) pour verrouiller le corps accessoire (4) sur ledit élément d'interposition (2).

15. Appareil selon l'une quelconque des revendications 11 à 14, dans lequel l'élément d'interposition (2) est fait d'un seul tenant avec la matrice (6) ou le poinçon (8) du moule pour presse (12).

16. Appareil selon l'une quelconque des revendications 11 à 14, dans lequel l'élément d'interposition (2) est séparable de la matrice (8) ou du poinçon (6) du moule (12).

17. Appareil selon l'une quelconque des revendications 11 à 16, dans lequel l'élément d'interposition (2) est un cadre fait de tout matériau qui conserve sa rigidité à des températures comprises entre 100 °C et 200 °C, d'une forme quelconque.
